# EUROPEAN PATENT APPLICATION

(11) **EP 4 442 114 A1**
(43) Date of publication of application: **09.10.2024**
(21) Application number: 24161636.6
(22) Date of filing: 06.03.2024
(51) Int. Cl.: A01K 1/02

(54) **PET CAGE**

(30) Priority: 06.04.2023 SI 202300045
(71) Applicant: Zupan, Igor, 1000 Ljubljana (SI)
(72) Inventor: Zupan, Igor, 1000 Ljubljana (SI)
(74) Representative: Sveticic, Andrej

(57) **Abstract**

The invention relates to a cage for pets, in particular dogs, the cage being particularly adapted for transport in a vehicle boot. The goal of the invention is to provide a cage that will allow the animal to easily enter the cage when the cage is in the boot of a vehicle and damage to the bumper is prevented. The pet cage (1) of the invention comprises a base (2), a rear side (3) and two lateral sides (4) which are connected to each other, a top side (5) and a front side (6) which are connected to each other, two grooves (7) in the form of guides formed in both lateral walls (4) along outer free edges from the inner side of the lateral walls (4), and two cylindrical pins (8) connected at the distal edge of the top side with the top side (5) in a way to project laterally from each other and engage in the grooves. In addition, some embodiments relate to a foldable cage.

## Description

### Field of invention

The invention relates to a cage for pets, in particular dogs, the cage being particularly adapted for transport in a vehicle boot.

### Prior art

Various cages for transport in a vehicle boot are known from prior art. When transporting animals, the cage is arranged in the boot so that the door of the cage is flush with the door of the vehicle. After transport, the user opens the vehicle door and the cage door and the animal jumps out. However, quite many problems can be encountered when the animal returns to its cage. It is difficult for small or older animals to jump so high to land at the height of the bottom of the cage. When trying to get into the cage, the animals use their paws and can damage the surface of the vehicle's bumper with their claws or, in the case of muddy paws, soil the vehicle's bumper or part of the boot.

An accordion type cover is known from prior art to protect the bumper from damage and dirt. However, such a cover does not make it easier for the animal to enter the cage.

Various ramps have been developed to make it easier for the animals to climb into the cage, while at the same time preventing damage to the bumper and soiling of the boot. One of these is disclosed in US 2022 349184 A1. The document discloses a telescoping pet ramp including a bottom frame that has a rectangular shape and fasteners to tether the telescoping pet ramp to an interior of a vehicle. The telescoping pet ramp includes a top frame, a platform, connectors, a ramp storage area, and a telescoping ramp. The top frame has four sides that create a rectangular shape and an opening between the four sides. The platform is attached to the top frame and covers the opening. Four or more connectors connect the top frame and the bottom frame. The ramp storage area is between the top frame and the bottom frame. The telescoping ramp is moveable with respect to a front of the top frame and a front of the bottom frame. The ramp storage area retains the telescoping ramp when the telescoping ramp is in a non-extended state.

Said ramp is a good solution to animal boarding problems and prevents damage to the bumper and soiling of the boot. Its disadvantage is that it takes up extra space in the boot.

### Technical problem

The technical problem is how to provide a cage for pets, in particular dogs, that will allow the animal to easily enter the cage when the cage is in the boot of a vehicle and prevent damage to the bumper. A further goal of the invention is to provide a cage that allows the animal to enter the cage easily without human assistance and without the need for additional devices, such as an access ramp, which would take up extra space in the boot of a vehicle. Furthermore, the invention aims to provide a collapsible pet cage that will take up as little space as possible in the boot of a vehicle when the cage is not in use.

### Solution to the technical problem

Relative terms such as front, back, lateral, etc. are defined with respect to the animal entering the cage in its functional position.

The technical problem is solved with a cage for pets, particularly dogs, which comprises:
- a base, a rear side and two lateral sides that are interconnected,
- a top side and a front side that are interconnected,
- two grooves in the form of guides formed in both lateral sides along the outer free edges from the inside of the lateral sides, and
- two cylindrical pins connected to the top side at the distal edge of the top side in a way to project laterally from each other, and engaging into the grooves.

When the user wishes to board an animal in the cage located in the boot of a vehicle, the user must apply force to the top side and the front side of the cage, such that the two cylindrical pins slide along the grooves until the two cylindrical pins reach their final position in the grooves. In this way, the top side and the front side of the cage are brought from the closed position to the open position. In the open position, the top side and the front side of the cage act as a ramp, making it easier for the animal to climb into the cage, while at the same time protecting the bumper of the vehicle from possible damage. After the animal has been boarded, the user reverses the action to bring the top side and the front side of the cage back into the closed position.

The advantage of the inventive cage for pets, in particular dogs, is that it allows the animal to easily enter the cage when the cage is in the boot of a vehicle and prevents damage to the bumper by the animal climbing the boot of the vehicle. A further advantage is to allow the animal to enter the cage easily without human assistance and without the need for additional devices, such as an access ramp, which would take up extra space in the boot of a vehicle.

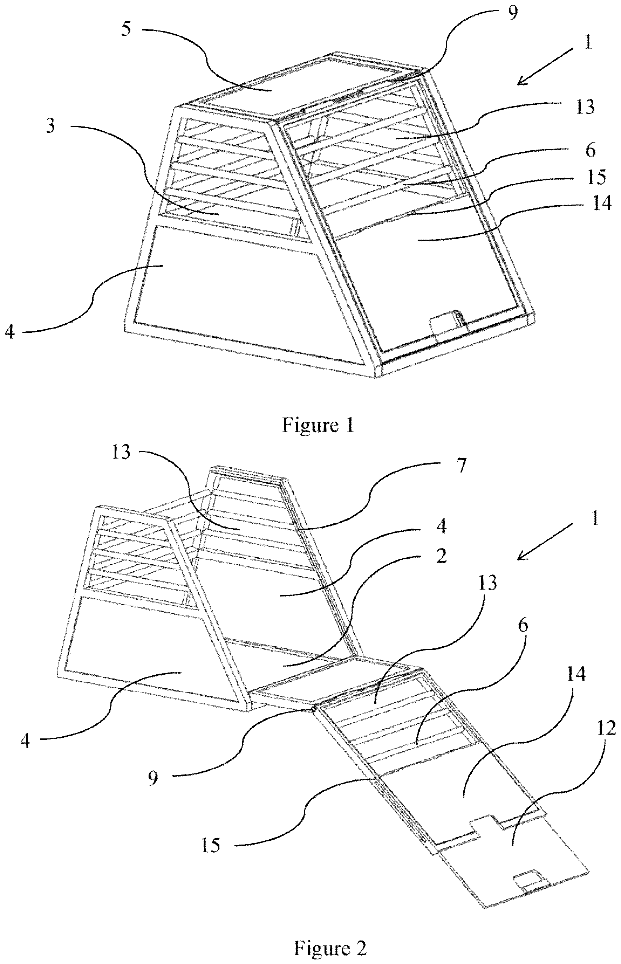

Figure 1: Pet cage in a closed position
Figure 2: Pet cage in an open position

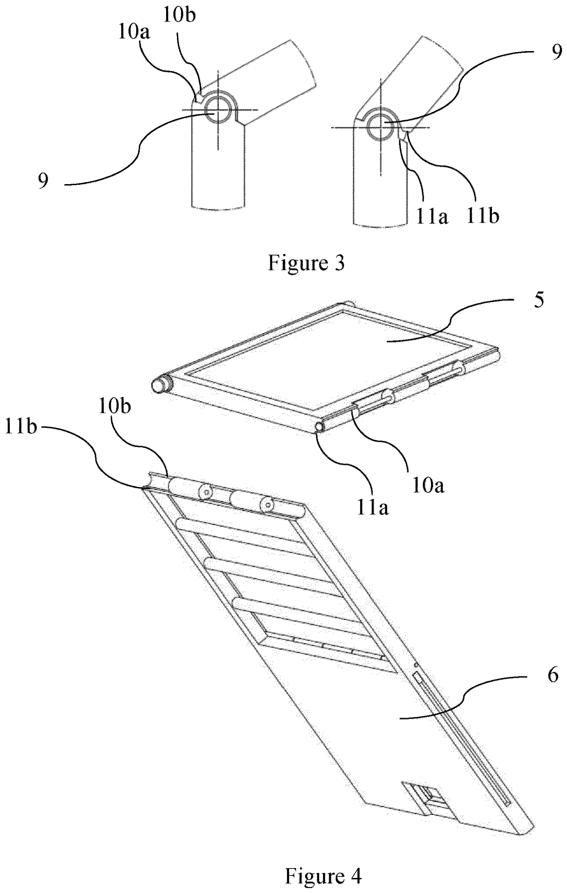

Figure 3: First hinge in both extreme positions
Figure 4: First hinge in a disassembled position

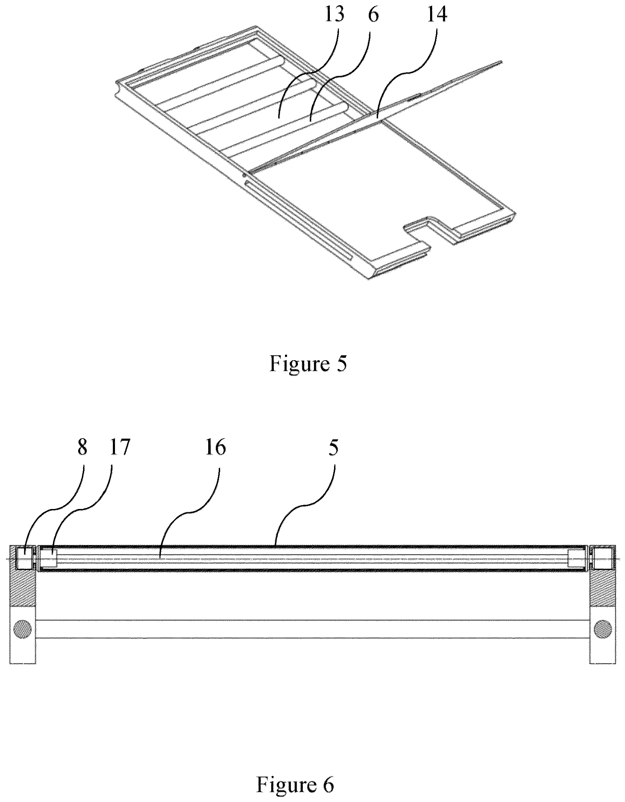

Figure 5: Front side with a hatch
Figure 6: Connection between the top side and two cylindrical pins in a cross-section

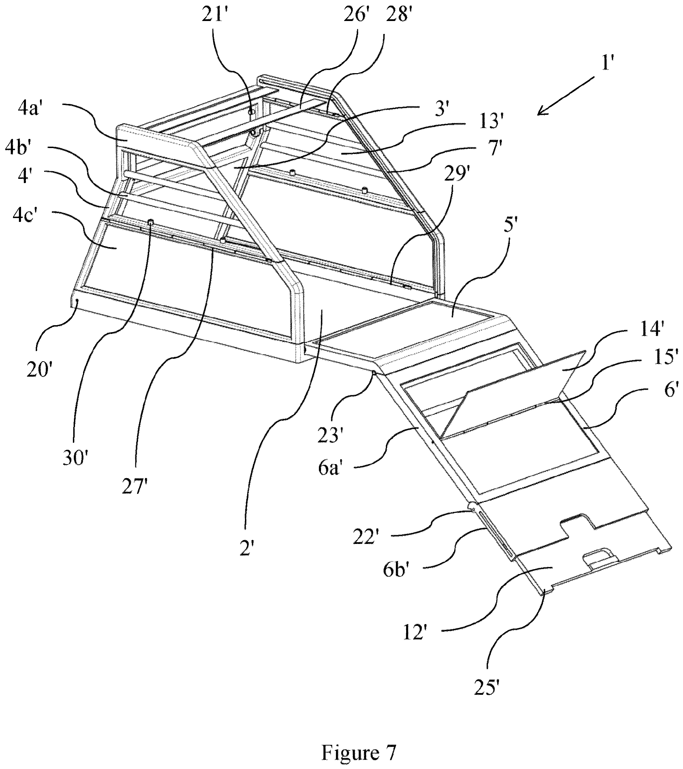

Figure 7: Foldable cage

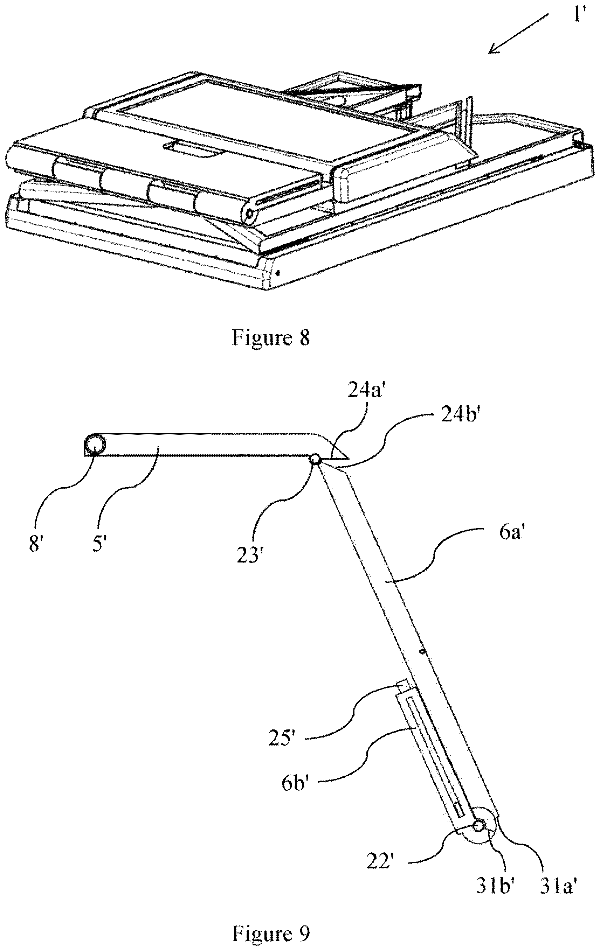

Figure 8: Foldable cage in a folded position
Figure 9: Top side and front side of the cage, cross-sectional view

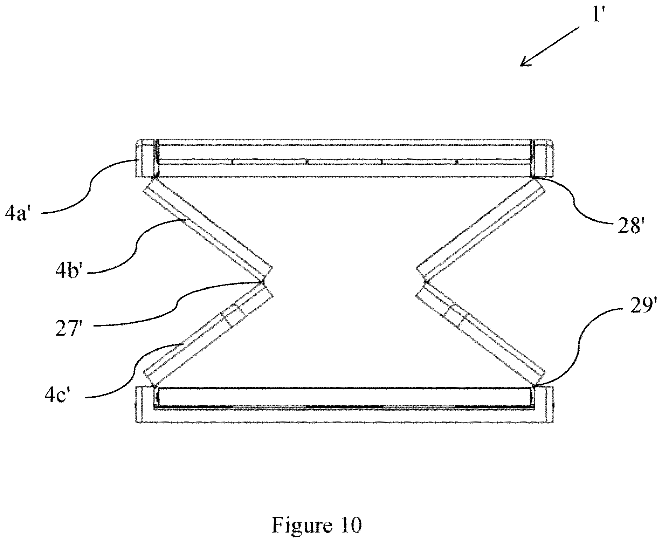

Figure 10: Foldable cage in a position illustrating folding of lateral sides
The invention is described in more detail hereinbelow.

The technical problem is solved with a cage 1, 1' for pets, particularly dogs, which comprises:
- a base 2, 2', a rear side 3, 3' and two lateral sides 4, 4' that are interconnected,
- a top side 5, 5' and a front side 6, 6' that are interconnected,
- two grooves 7, 7' in the form of guides formed in both lateral sides 4, 4' along the outer free edges from the inside of the lateral sides 4, 4', and
- two cylindrical pins 8, 8' connected to the top side 5, 5' at the distal edge of the top side in a way to project laterally from each other, and engaging into the grooves.

When the user wishes to board an animal in the cage located in the boot of a vehicle, the user must apply force to the top side and the front side of the cage, such that the two cylindrical pins slide along the grooves until the two cylindrical pins reach their final position in the grooves. In this way, the top side and the front side of the cage are brought from the closed position to the open position. In the open position, the top side and the front side of the cage act as a ramp, making it easier for the animal to climb into the cage, while at the same time protecting the bumper of the vehicle from possible damage. After the animal has been boarded, the user reverses the action to bring the top side and the front side of the cage back into the closed position.

It is recommended that the top side 5, 5' of the cage be formed substantially parallel to the base 2, 2' of the cage. It is further recommended that the front side 6 be inclined with respect to the horizontal at an angle of 50° to 70°, preferably 55° to 65°.

The top side and the front side can also be fixed to each other. According to a preferred embodiment, the top side 5 and the front side 6 are interconnected by a first hinge 9. Further preferably, the first hinge 9 is formed by two pairs of first stops 10a, 10b; 11a, 11b which limit the rotational movement of the front side relative to the top side about the first hinge by an angle of not more than 25°, preferably about 20°. In this way, in the open position of the cage, the angle between the floor and the front side can be reduced, which in this position serves as a ramp for the animal to climb into the cage, thus making it easier to climb.

In a further embodiment, the front side 6, 6' is provided at its lower end with a pull-out segment 12, 12' which is telescopically connected to the front side. The pull-out segment can be pulled out when the cage is used in a vehicle with a relatively high boot compartment.

The rear side 3, 3' and/or the front side 6, 6' and/or the lateral sides 4, 4' may, in particular in the upper part of the sides, particularly preferably in the upper half of the sides, be provided with holes 13, 13'. The holes allow ventilation of the cage and improve the visibility of both the caged animal and the driver when driving.

The front side may further be provided with a hatch 14, 14' coupled to the front side 6, 6' by a second hinge 15, 15' arranged in the central part of the front side in such a way that the axis of the second hinge and the junction of the top side and the front side are parallel to each other. The hatch can be used to cover the holes in the upper half of the front side to facilitate boarding and disembarking of animals when the front side acts as a ramp. This way, the animal's paw can be prevented from slipping into the hole in the front side.

In order to better guide the cylindrical pins in the grooves, according to the preferred embodiment, the connection between the top side 5 and the cylindrical pins 8 comprises a pivot axle 16, at the ends of which said cylindrical pins 8 are fixed, and bushings 17 fixedly connected to the top side 5 and in which said pivot axle 16 is mounted.

The front side can further be provided with a latch or lock to prevent unwanted opening of the cage.

The invention further relates to a foldable cage 1' for pets, characterized in that:
the rear side 3' is articulated to the base 2' of the cage via a third hinge 20',
the rear side is provided with at least one first, preferably spring tensioned locking element 21' to fix the rear side in place when the cage is in the operating position,
the front side 6' is formed by a first 6a' and a second section 6b' of the front side, which are hinged to each other via a fourth hinge 22', with the first section 6a' of the front side adjacent to the top side 5' being inclined with respect to the horizontal at an angle of 35° to 50°, preferably 40° to 45°, and the second section 6b' of the front side adjacent to the base 2' being arranged substantially perpendicular to the base when the cage is in the operating position, the first section 6a' of the front side being hinged to the top side 5' of the cage via a fifth hinge 23', wherein the fifth hinge is formed by at least one pair of second stops 24a', 24b' which limit the rotational movement of the first section of the front side relative to the top side of the cage so that the first section of the front side is movable from a position where the first section of the front side is lying on the top side of the cage to a position where the first section of the front side is inclined with respect to the horizontal at an angle of 35° to 50°, preferably 40° to 45°, when the cage in the operating position, the second section of the front side being provided with at least one second, preferably spring tensioned locking element 25' to fix the second section of the front side in place when the cage is in the operating position,
each of the lateral sides 4' of the cage being formed by a first 4a', a second 4b' and a third 4c' section of the lateral side, wherein the two first sections of the lateral sides adjacent to the top side 5' are fixed to each other by a transverse link 26', the second and third sections of a respective lateral side, which are equal in height, being hinged together via a sixth hinge 27', wherein the second section of the lateral side adjacent to the first section of the lateral side is hinged to the first section of the lateral side via a seventh hinge 28', and the third section of the lateral side adjacent to the base is hinged to the base of the cage via an eighth hinge 29', and each lateral side being provided with at least one third, preferably spring tensioned locking element 30' to fix the lateral side in place when the cage is in the operating position.

When the user wishes to transfer the cage from the operating position to the folded position, the first locking element needs to be released and the rear side rotated around the third hinge so that it lies on the base of the cage, then the second locking element needs to be released and the second section of the front side rotated around the fourth hinge so that it lies on the first section of the front side, then both sections need to be rotated together around the fifth hinge so that they lie on the cage top side, then the third locking elements on both lateral sides need to be released to lower the cage top side to the base of the cage, thus achieving the folded position of the cage.

In a preferred embodiment, the fourth hinge 22' is formed by at least one pair of third stops 31a', 31b' which limit the rotational movement of the second section of the front side relative to the first section of the front side, so that the second section of the front side is movable out of the position, in which the second section of the front side lies on the first section of the front side, to a position, in which the second section of the front side lies in the same plane as the first section of the front side, or to a position, in which the second section of the front side is vertically arranged when the cage is in the operating position.

The foldable pet cage has a further advantage over known cages because it takes up as little space as possible in the boot of a vehicle when the cage is not in use.

## Claims

1. A cage (1, 1') for pets, particularly dogs, which comprises:
- a base (2, 2'), a rear side (3, 3') and two lateral sides (4, 4') that are interconnected,
- a top side (5, 5') and a front side (6, 6') that are interconnected,
- two grooves (7, 7') in the form of guides formed in both lateral sides (4, 4') along the outer free edges from the inside of the lateral sides (4, 4'), and
- two cylindrical pins (8, 8') connected to the top side (5, 5') at the distal edge of the top side in a way to project laterally from each other, and engaging into the grooves.

2. The cage according to claim 1, **characterized in that** the top side (5, 5') of the cage is formed substantially parallel to the base (2, 2') of the cage.

3. The cage according to claims 1 or 2, **characterized in that** the front side (6, 6') is provided at its lower end with a pull-out segment (12, 12') which is telescopically connected to the front side.

4. The cage according to any of the preceding claims, **characterized in that** the rear side (3, 3') and/or the front side (6, 6') and/or the lateral sides (4, 4') are, in particular in the upper part of the sides, particularly preferably in the upper half of the sides, provided with holes (13, 13').

5. The cage according to any of the preceding claims, **characterized in that** the front side is further provided with a hatch (14, 14') coupled to the front side (6, 6') by a second hinge (15, 15') arranged in the central part of the front side in such a way that the axis of the second hinge and the junction of the top side and the front side are parallel to each other.

6. The cage according to any of the preceding claims, **characterized in that** the connection between the top side (5) and the cylindrical pins (8) comprises a pivot axle (16), at the ends of which said cylindrical pins (8) are fixed, and bushings (17) fixedly connected to the top side (5) and in which said pivot axle (16) is mounted.

7. The cage according to any of the preceding claims, **characterized in that** the front side is further provided with a latch or lock.

8. The cage according to any of the preceding claims, **characterized in that** the front side (6) is inclined with respect to the horizontal at an angle of 50° to 70°, preferably 55° to 65°.

9. The cage according to any of the preceding claims, **characterized in that** the top side and the front side are fixed to each other.

10. The cage according to any of claims 1-8, **characterized in that** the top side (5) and the front side (6) are connected to each other by a first hinge (9).

11. The cage according to claim 10, **characterized in that** the first hinge (9) is formed by two pairs of first stops (10a, 10b; 11a, 11b) which limit the rotational movement of the front side relative to the top side about the first hinge by an angle of not more than 25°, preferably about 20°.

12. The foldable cage (1') according to any of claims 1 to 7, **characterized in that**:
- the rear side (3') is articulated to the base (2') of the cage via a third hinge (20'),
- the rear side is provided with at least one first, preferably spring tensioned locking element (21') to fix the rear side in place when the cage is in the operating position,
- the front side (6') is formed by a first (6a') and a second section (6b') of the front side, which are hinged to each other via a fourth hinge (22'), with the first section (6a') of the front side adjacent to the top side (5') being inclined with respect to the horizontal at an angle of 35° to 50°, preferably 40° to 45°, and the second section (6b') of the front side adjacent to the base (2') being arranged substantially perpendicular to the base when the cage is in the operating position, the first section (6a') of the front side being hinged to the top side (5') of the cage via a fifth hinge (23'), wherein the fifth hinge is formed by at least one pair of second stops (24a', 24b') which limit the rotational movement of the first section of the front side relative to the top side of the cage so that the first section of the front side is movable from a position where the first section of the front side is lying on the top side of the cage to a position where the first section of the front side is inclined with respect to the horizontal at an angle of 35° to 50°, preferably 40° to 45°, when the cage in the operating position, the second section of the front side being provided with at least one second, preferably spring tensioned locking element (25') to fix the second section of the front side in place when the cage is in the operating position,
- each of the lateral sides (4') of the cage being formed by a first (4a'), a second (4b') and a third (4c') section of the lateral side, wherein the two first sections of the lateral sides adjacent to the top side (5') are fixed to each other by a transverse link (26'), the second and third sections of a respective lateral side, which are equal in height, being hinged together via a sixth hinge (27'), wherein the second section of the lateral side adjacent to the first section of the lateral side is hinged to the first section of the lateral side via a seventh hinge (28'), and the third section of the lateral side adjacent to the base is hinged to the base of the cage via an eighth hinge (29'), and each lateral side being provided with at least one third, preferably spring tensioned locking element (30') to fix the lateral side in place when the cage is in the operating position.

13. The cage according to claim 12, **characterized in that** the fourth hinge (22') is formed by at least one pair of third stops (31a', 31b') which limit the rotational movement of the second section of the front side relative to the first section of the front side, so that the second section of the front side is movable out of the position, in which the second section of the front side lies on the first section of the front side, to a position, in which the second section of the front side lies in the same plane as the first section of the front side, or to a position, in which the second section of the front side is vertically arranged when the cage is in the operating position.
